# EUROPEAN PATENT SPECIFICATION

(11) **EP 3 652 593 B1**
(45) Date of publication and mention of the grant of the patent: **27.07.2022**
(21) Application number: 18738330.2
(22) Date of filing: 11.07.2018
(51) Int. Cl.: G05B 13/04, C21D 11/00, C21D 9/56

(54) **METHOD FOR OPERATING A CONTINUOUS PROCESSING LINE**
VERFAHREN ZUM BETRIEB EINER KONTINUIERLICHEN VERARBEITUNGSSTRASSE
PROCÉDÉ DE FONCTIONNEMENT D'UNE LIGNE DE TRAITEMENT CONTINUE

(30) Priority: 12.07.2017 EP 17180898
(43) Date of publication of application: 20.05.2020
(73) Proprietor: Tata Steel Nederland Technology B.V., 1951 JZ Velsen-Noord (NL)
(72) Inventor: WU, Hai, 1970 CA IJmuiden (NL)
(74) Representative: Group Intellectual Property Services
(86) International application number: PCT/EP2018/068824
(87) International publication number: WO 2019/012002

(56) References cited:
- US-A1- 2014 175 713

## Description

This invention relates to a method for operating a continuous processing line and to a computerised process automation system for a continuous processing line.

A continuous processing line (CPL) consists of various process steps including typically, and not in any particular order, annealing, hot-dip coating, temper rolling and tension levelling. Together these process steps serve multiple processing purposes to deliver strip products in good mechanical, surface and geometry properties in both intermediate states and in its final state. Failing to satisfy an intermediate state jeopardises the subsequent processes and related properties. It results in downgrades or rejections as the end product concerns and economical penalties. So the control of the process settings has become increasingly important to attempt to control the final properties of the end product. Lately the focus has shifted from process control only to property control of the end product. Control models linking process setting to resulting properties have become increasingly important as a result, and usually these control models rely on the input of sensors which measure one or more process parameter, such as temperature or thickness.

The property control based on the sensor measurement placed at the end of the process sections, as disclosed in WO2014187886, incurs a large dead time in the control loop due to the transportation of the strip in the lengthy passage through the line. It can lead to substantial material losses before the control detects and remedies the deviations. For some situations, a strip in short length e.g. already passes the critical heat-treatment temperature regime before the strip head reaches the property measuring point. The control is thus not effective and can be too late to act.

The property control based on the model prediction, as disclosed in EP2742158, provides a solution to compensate the dead time in the control loop. It uses a property model to online predict the properties based on the process histories and to adjust the remaining processes in the line, if necessary, to remedy otherwise quality deviations based on the prediction. It does not, however, consider the forthcoming process dynamics, constraints and disturbances imposed by the scheduled strip transitions. From the production practice it is known that these operational parameters can be a dominating factor of whether the process pre-sets, determined by the property model or the empirical routine, are realistic and achievable. Therefore without considering the forthcoming process circumstances, the control actions that are solely determined by the property model can be poorly judged, infeasible, and lead to instable operation. For example, the annealing of a thick strip A followed by a thin strip B requires an increase in the line speed to compensate the temperature overshoot that would occur otherwise at the thickness transition and to minimise the risk of heating buckles. But the galvanising process following the annealing needs to decrease the line speed from the same strip A with a high coating thickness target to the strip B with a low coating thickness due to the limitation in the gas pressure of the wiping process, or in case of electroplating, due to desired differences in plating layer thickness. Such conflict cannot be solved satisfactorily by the property models.

The feedstock of a continuous processing line, which end products for example serve the automotive market or the packaging market, is diverse in terms of the strip dimensions, the material chemistries, the entry conditions and in-strip spatial inhomogeneities as created by the prior processes, the end product properties and hence process requirements. Possible combinations of all these factors form endless variations in the process requirements varying from order to order and further from strip to strip. In a time where just in time delivery is commonplace, the size of individual orders decreases. It is therefore common that to a considerable extent the process in the continuous processing line is in a transient and therefore dynamic state. The task to mitigate the impact of the transient process conditions on the product properties demands skilful operators and their constant attentions. A control method or automation system without properly considering or more preferably predicting the forthcoming dynamics of the processes can result in improper control advices, actions and hence suboptimal results.

The problem with the current process control systems is that the classical set-up and feed-back models are only adequate in a situation where a lot of material is produced that is more or less the same. In this case the changes between subsequent coils are minimal in terms of mechanical, surface and geometry properties. However as a result of the sketched developments the batch size decreases to such an extent that unique strips are more and more being produced, which may even have transient mechanical, surface and geometry properties over the length. With the classical set-up and feed-back this means that e.g. a change in annealing temperature will not be in time for the head of the strip. This long dead time results in a potentially downgraded product, and thus in loss of yield.

It is an object of the invention to provide a method which reduces the dead time in the process control of a continuous processing line.

It is another object of the invention to provide a method which is able to produce continuously processed end products with an improved yield.

It is another object of the invention to provide a method which is able to produce continuously processed end products with tighter tolerances for mechanical, surface and/or geometric properties.

It is another object of the invention to provide a method which is capable of dealing with the dynamics of process control in modern production of continuously processed steels.

One or more of these objects are reached with a method as defined in claim 1.

Examples of prior process conditions may be the coiling temperature of a segment, or the reduction in the cold-rolling mill.

It should be noted that if the mechanical, surface and/or geometry properties of a segment of the incoming rolled strip are accurately predicted or measured, the MPM may not require input relating to chemical composition or prior process conditions or microstructural parameters. The output of the MPM, in addition with one or more of the installation condition parameters, one or more of the input parameters for the MPM (e.g. the schedule) and (optionally) feedback from on-line CPL process measurements are provided to the DPM to predict the FPS with the DPM.

Preferred embodiments are provided in the dependent claims.

With the method according to the invention the dead time issue in the control loop is effectively addressed. Also the knowledge and prediction of the forthcoming process dynamics, constraints and disturbances imposed by the scheduled strip transitions are effectively included as well as the knowledge and prediction of the impact on the product properties of the forthcoming process dynamics, constraints and disturbances imposed by the scheduled strip transitions. By iteratively examining the properties prediction and the processes prediction against the properties targets and operational targets the process control is optimised. The integration of the annealing and the optional coating, temper rolling, tension levelling processes and coating process to enable the CPL to produce strips with excellent quality including mechanical, surface and geometry properties. The method according to the invention is based upon the determination of process settings for a segment of strip. The length of such a segment can be different from strip to strip. One strip may comprise only one segment, or a multitude of segments. The number of segments needed per strip is determined by the DPPC on a case by case basis, or is provided by the previous processes. For example, the DPPC may use the same segments as the preceding hot-rolling process.

The process schedule is the succession of strips that are to be produced. Each strip has its own set of properties such as strip dimensions (e.g. width, length, thickness), the chemical composition, the entry conditions and in-strip spatial inhomogeneities as created by the prior processes (hot rolling, pickling and cold rolling, etc.), the target mechanical, surface and geometry properties. To reach the target mechanical, surface and geometry properties the process settings for the continuous processing line must be chosen carefully, also taking into account the preceding installation and process conditions.

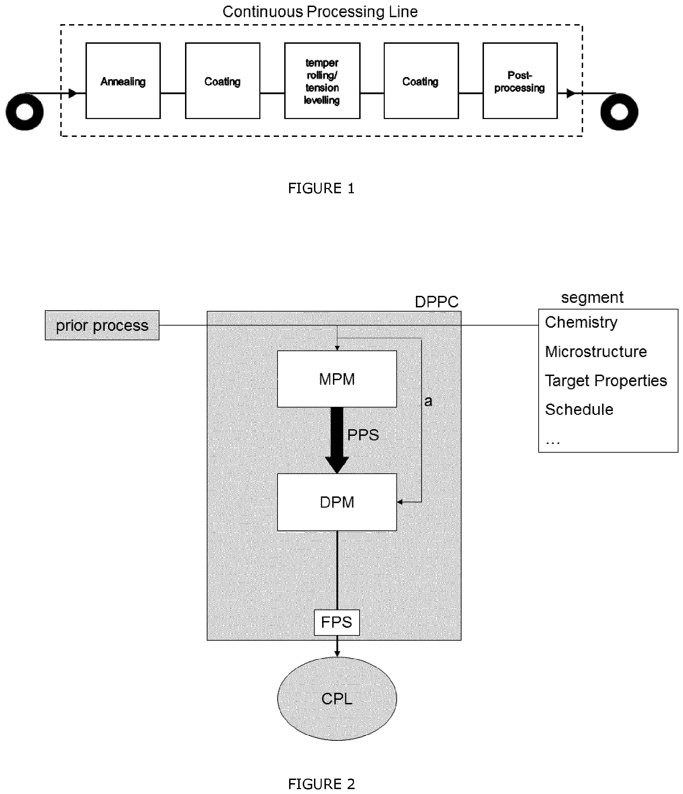

Figure 1 shows a schematic representation of a continuous processing line (dashed box). The CPL may comprise of a combination of process steps as depicted therein, wherein the strip segments travel from left to right. In its most limited embodiment the CPL would consist of a continuous annealing step only. However usually such a continuous annealing step would be followed by a temper rolling step and/or a post-processing step such as oiling or a lubricant. In many cases the continuously annealed strip is coated in a hot-dip coating process, or an electroplating process, and may subsequently be temper rolled and/or coated with an organic or inorganic coating. The flexibility of the method according to the invention is such that the DPPC can be tailored to each CPL.

It is noted that the order in Figure 1 is a common order of process steps, but the method according to the invention also allows for different orders. It is envisageable that coating with a metallic coating can take place in a first coating step, followed by temper rolling and a second coating step with organic coating or an inorganic coating, or metallic coating, followed by organic coating, followed by temper rolling.

Figure 1 shows the mandatory annealing step and the optional subsequent process steps:
- a continuous annealing step (mandatory)
- a first coating process
- a temper-rolling and/or tension levelling process
- a second coating process
- a post-processing step

In an embodiment the first and/or second coating step is a hot-dip coating process or an electroplating process.

In an embodiment the DPPC also provides the FPS for the CPL automation of the thickness control of the hot dip coating layer.

In an embodiment the first and/or second coating step is an organic coating step.

In an embodiment the first and/or second coating step is an inorganic coating step. In a preferred embodiment the inorganic coating step comprises or consists of a physical vapour deposition (PVD) process.

The post-processing step may comprise processes such as passivation, oiling, etc.

In Figure 2 the **Dynamic Property Predictive Control** (DPPC) model is schematically presented. By inputting relevant prior process parameters, target mechanical, surface and geometry properties, production schedule, microstructure, chemistry etc. the **Materials Property Model** (MPM) predicts a set of preliminary process settings (PPS) with which the target mechanical, surface and geometry properties for a segment of strip can be obtained according to the MPM. These PPS (represented with the thick black arrow in Figures 2 to 4) are offered up to the **Dynamic Process Model** (DPM) which determines whether these PPS can be realised in the CPL. If this is indeed the case then these PPS are passed from the DPPC to the control systems of the CPL as the final process settings (FPS). The line tagged "a" in Figures 2 to 4 illustrates that the DPM may also use one or more input parameters for the MPM in the calculation of the FPS.

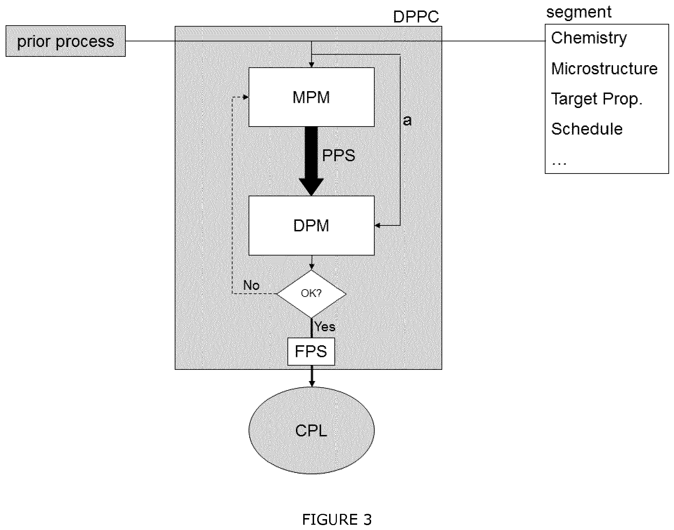

If the DPM decides that the desired process settings as proposed by the MPM cannot be realised in the CPL, then an iterative process is initiated wherein the MPM, based on what is realisable proposes a new set of process parameters to the DPM, just as long as it takes to arrive at the best solution, which is then passed on to the control systems of the CPL. The best solution is the solution where the difference between the target properties and the achievable properties is lower than a pre-set minimum. As long as this pre-set minimum is not reached, the iteration as shown in Figure 3 by the dashed line is repeated. If the minimum is not reached at all, then the introduction of a dummy strip in the schedule between two appropriate strips may be recommended by the DPPC wherein the dummy strip serves as a sacrificial strip, allowing for a certain transience in process conditions to be achieved while running the dummy strip through the CPL so that when the first segment of the next strip enters the CPL that the FPS are optimal for the realisation of the target properties of the segment.

The DPM is used to predict forthcoming process conditions. The model describes the states and dynamics of the installations and processes including the heat transfer during the annealing, the gas-metal reaction on the strip surface, and if applicable, the hot-dip coating process, the wiping process after the hot-dip coating, the temper rolling, and/or the tension levelling.

The MPM is used to predict the intermediate and final state of the strip properties including the mechanical properties (grain size, yield strength, tensile strength, elongation, phase fraction, etc.), the external/internal oxidation and surface wettability for hot dip coating, and/or the geometry (surface roughness, shape) based on input process conditions.

These calculations are performed in real time to determine the process settings (and tolerances) based on the process and property predictions for the given production schedule.

It is necessary to optimise the process settings so that the target mechanical, surface and geometry properties of the multiple strips in sequence can be realised in acceptable consistency, and the process variations and dynamics as demanded by the process settings are executable and meet the operational targets.

If any of the requirements is violated, an exception or alarm is raised to notify the deviations. It may lead to a re-scheduling of the production sequence or a request for a dummy or non-constrained strip if economically favourable. This may for instance be the case if a very big difference in annealing temperature is required from one strip to the next. If a rescheduling is not possible, then a dummy strip may be entered between these two strips, and the dummy strip then serves as a sacrificial strip.

The invention employs both process models and property models to predict the forthcoming production, including multiple strips and consecutive transitions, given the production schedule. It is the only way to be able to forecast the course of the process as much close to reality as possible, and upon that to optimise the process settings and compute the control actions to meet the multiple processing purposes and production goals simultaneously. By doing so, the hit rate of the said production can be maximised to yield strip products with excellent properties.

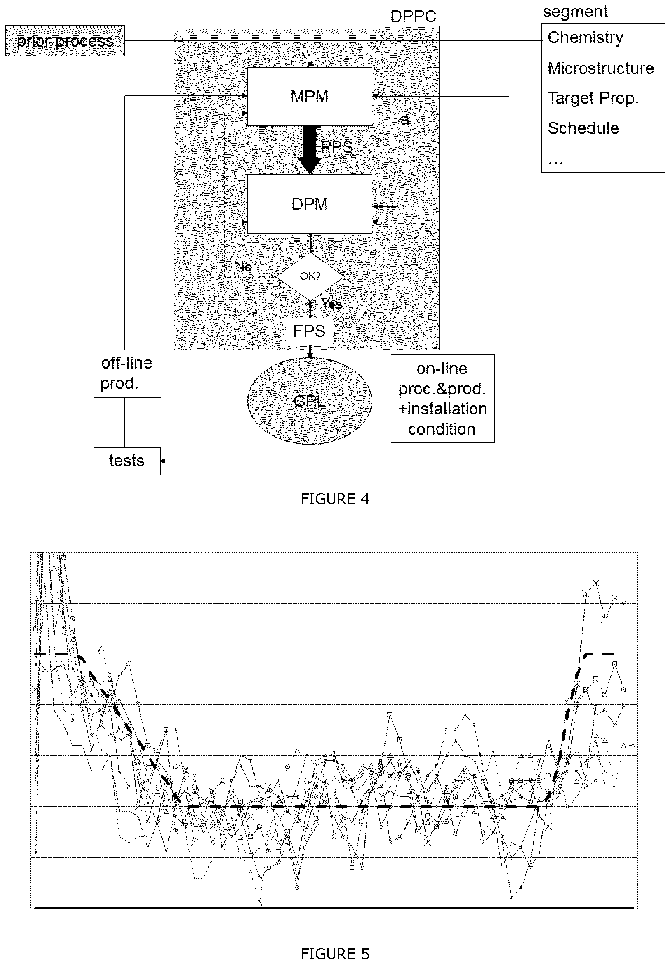

In Figure 4 the DPPC is shown with the iteration depicted by the dashed line and it also shows the additional sources of input to the DPPC such as the results of off-line product tests, of on-line process and product measurements and installation condition. With these results both the DPM and the MPM can be improved.

In the method involving the **Dynamic Property Predictive Control** (DPPC) according to the invention the following steps can be distinguished:
a) collect and receive the inputs;
b) compute and predict the preliminary process settings and, if necessary, the resulting intermediate and final properties given the production schedule, the target properties and other inputs;
c) compute, validate and, if necessary, adjust the preliminary process settings given the production schedule, the installation conditions and other inputs;
d) iterate the steps b) and c) to optimise the preliminary process settings to maximise the satisfaction of the properties targets and operational targets, generate an exception notification when a target violation is foreseen and cannot be avoided;
e) calculate the final process settings for the forthcoming strips and transitions;
f) optionally collect and receive the process and property measurements and adapt the DPPC model, if necessary, to improve the accuracy of the DPPC models, or any one of the MPM or DPM.

In a cyclic operation as for real time control application, it starts with the step a) to gather the input relating to production schedule, feed stock (strip) properties and conditions as produced by the prior processes, and end product properties requirements and equipment condition and maintenance, available capacities etc., and provide them to the MPM and DPM for the iterative computation. The computation includes the steps b), c) and d) to maximise the satisfaction of the properties targets and operational targets. The process settings for the given production schedule are one of the outcomes of the computation. The final process settings are sent to the automation and/or control instrumentation system of the line. The exception notification is sent to the production unit that generates the production schedule for appropriate action or amendment of the schedule. Process condition measurements and intermediate and final property measurements (off-line and on-line) are regularly collected to adapt the parameters of the MPM and DPM. Preferably the cyclic operation is executed at least once per 30 minutes, preferably in a range from once per minute to once per second.

Conventional process control instrumentation is present in the CPL to measure process parameters such as line speed and temperatures to make sure that the FPS are realised.

The process settings can vary from strip to strip and from segment to segment within a strip. The calculation of the process settings of a particular strip or a segment of a strip is completed before the strip is loaded onto the de-coiler at the line entry, and preferably before the strip production sequence is confirmed. A re-calculation of the process settings is necessary when the production schedule or the inputs are changed, or when the actual process deviates beyond the tolerances of the latest issued process settings due to unforeseen equipment failures, manual intervention on the processing speed, etc.

The invention relates to a method for controlling a continuous processing line an annealing furnace to produce metal strip with excellent properties. It operates on a computerised system comprising:
- data input including the production schedule containing multiple strips listed in production order, and of which the strip dimensions, the material chemistries, the entry conditions and in-strip spatial inhomogeneities as created by the prior processes (hot rolling, pickling and cold rolling, etc.), the end product properties and hence process requirements.
- process models that describe and predict the states and dynamics of the installation and processes including the heat transfer during the annealing, the gas-metal reaction on the strip surface, the coating process (hot-dip galvanising, electroplating e.g.), the coating layer thickness regulation (zinc wiping process after the galvanising or current densities e.g.), the temper rolling, and/or the tension levelling.
- material property models that describe and predict the intermediate and final state of the strip properties including the mechanical properties, the external/internal oxidation and surface wettability for galvanising or electroplating, and/or the geometry, using the conditions provided by the process models.
- perform an optimisation algorithm by iteratively examining the processes prediction and the properties prediction to yield the process settings for the given production schedule. The process settings can vary from strip to strip and from segment to segment within a strip. The calculation of the process settings of a particular strip or a segment of a strip is completed before the strip is loaded onto the de-coiler at the line entry, and preferably before the strip production sequence is confirmed.
- data output including the process settings to the automation and/or control instrumentation system of the line which then implements the settings and produces the segment of the steel strip with the target mechanical, surface and/or geometry properties.

By means of non-limiting examples, the following issues serve as illustrations of the capability of the DPPC:
For the **annealing,** the setting defines maximum and minimum temperatures determined by the required mechanical property norm, and target temperatures aiming to yield a more uniform property, considering the material chemistry, the entry conditions and in-strip spatial inhomogeneities produced by the prior processes (hot strip mill, pickling line, cold-rolling mill, etc.), and the predicted processing speed and (de-)accelerations. The minimum and maximum temperature settings also carry the constraints defined by the required shape and surface properties prior to the coating process, and the thermal dynamics during the strip transitions, etc.
For the **processing (or strip) speed,** the setting defines target speed, maximum and minimum limits determined by the required coating thickness and its control, the required mechanical property and its temperature-time control, the required surface roughness, the temper rolling reduction and its control, etc.
For the **coating thickness,** the setting defines the pressure of the wiping gas media, the distance between the gas jet outlet and the strip, the gas compressor head pressure determined by the required coating type and thickness, the required temper reduction and levelling elongation, the predicted processing speed and (de-)accelerations, etc.
For the **surface conditioning** prior to the galvanising, the setting defines the combustion air-to-fuel flow ratio, the oxygen concentration of the oxidation injection, the dew point of the furnace atmosphere, etc. determined by the material chemistry, the required galvanising bath chemistry, the predicted temperature evolution, the predicted processing speed, etc.
For the **strip shape** prior to the coating, the setting defines the temperature limits and maximum gradients for the (rapid) heating and cooling, the heating and cooling flux distribution over the strip width, the line tension, the none-flatness tolerance, etc. determined by the strip dimension (thickness to width ratio), the transport roll dimension, the required mechanical property and its temperature-time control, the predicted processing speed, the required coating thickness and its control, etc.
For the **temper rolling** and/or **tension levelling,** the setting defines the optimal reduction and/or elongation for an entire strip to maximise the prime quality, given the knowledge of the predicted annealing process, the predicted processing speed, the predicted inline shape, the material dimension, the required mechanical, geometry and surface properties.

It should be noted that the incoming rolled-strip may be hot-rolled strip, or cold-rolled strip. Hot-rolled strip is not normally subjected to further annealing, but in specific cases it may be necessary. For instance, if a hot-rolled strip is to be hot-dip coated, there is a need to heat the strip before dipping to avoid the metal dipping bath from cooling down below the operating temperature. This is usually referred to as the heat-to-coat process. There is no need to heat the strip to affect the properties, such as in recrystallisation and/or austenitisation annealing of cold-rolled strip. On the other hand, for hot-rolled steels containing certain microstructures such as martensite or for hot-rolled steels which still have a potential for precipitation hardening because of dissolved elements, an annealing treatment may be beneficial to temper the martensite and improve the ductility of the steel, or to promote the precipitation and improve the strength of the steel.

In a preferable embodiment the incoming steel strip is a cold-rolled steel. This is the most common form to be annealed in a CPL according to the invention and these steels have to be produced against ever tightening tolerances and ever increasing demands as to the number of allowable defects, the mechanical properties, the surface quality and the dimensions and dimensional tolerances.

In a cyclic operation as for real time control application, the process settings for the given production schedule are automatically calculated and sent to the automation and/or control instrumentation system of the line. The exception notification is generated if a target violation is foreseen and sent to the scheduling unit that generates the production schedule.

Preferably a re-calculation of the process settings is automatically triggered when the production schedule or the inputs are changed, or when the actual process deviates beyond the tolerances of the latest issued process settings due to unforeseen equipment failures, manual intervention on the processing speed, etc.

The invention is also embodied in a computerised process automation for a continuous processing line, wherein the process automation is embodied such that, during operation, it carries out a method according to the invention.

The invention is also embodied in a continuous processing line which is controlled by a computerised process automation according to the invention, and in a continuous processing line in which, during operation, the FPS for a segment of incoming steel strip are determined, set and realised by the CPL computerised process automation, according to the invention to enable production of a segment of the steel strip with the target mechanical, surface and/or geometry properties.

The invention's usefulness is demonstrated by means of the following, non-limiting, example and figures.

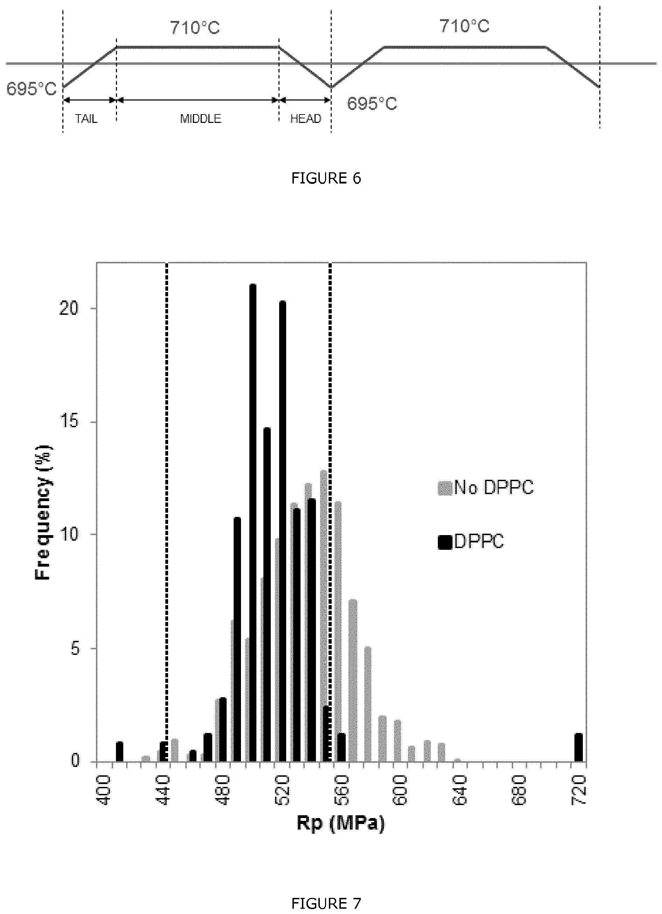

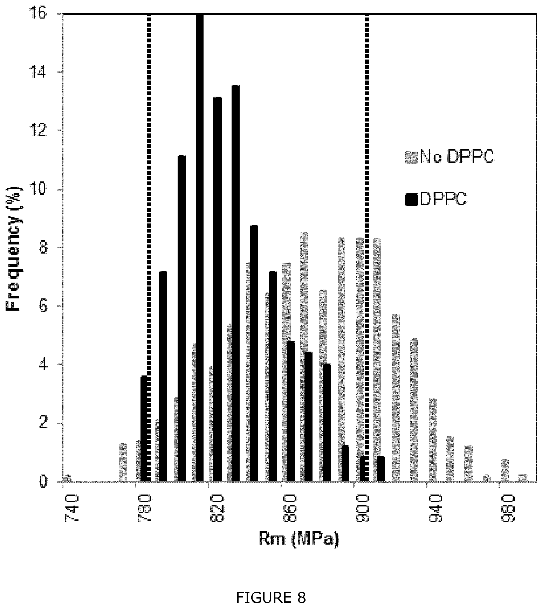

Figure 7 and 8 show measurements of the mechanical properties of a galvanised high strength steel grade produced from a continuous processing line. In light grey the results without DPPC are depicted. In black the results for the same steel produced with a version of the DPPC are depicted. The depicted mechanical properties are the yield stress (Rp) and the tensile strength (Rm). The properties without DPPC show a wide distribution with a significant degree of measurements outside the tolerance (dashed vertical lines). 35% would have been rejected on Rp (Figure 7) and 30% on Rm (Figure 8). The DPPC predicted that significant improvements would be made by adapting the annealing regime with consideration of the coiling temperature regime realised in the run-out-table cooling of hot strip mill (HSM).

A controlled coiling temperature was used where head and tail of the hot-rolled strip are coiled at a higher temperature to compensate for the faster cooling rate at the outer wraps of the hot-rolled coil. Figure 5 shows the temperature against the normalised length for a large number of strips. These hot-rolled and U-type cooled strips were subsequently pickled and cold-rolled. In addition thereto, by taking into account the in-strip spatial inhomogeneity realised from the prior process steps, the DPPC proposed a lower annealing temperature for the head and tail of the cold-rolled strip of these hot-rolled coils compared to the middle segment(s) of the strip. This is schematically depicted in Figure 6. The horizontal line at around 705 °C represents the prior art practice of an equal annealing temperature over the entire length of the strip. The rapid heating furnace of the annealing step in the said processing line subsequently imposed this temperature regime onto the cold-rolled strips and the results of the final product are given in black in Figure 7 and 8. These values show a significantly reduced width of the distribution as well as a much better performance against the tolerance. The rejection rate on Rp dropped to 5% and on Rm to 2%.

## Claims

1. Method for operating a continuous processing line hereinafter referred to as CPL,
the CPL comprising an annealing step for the production of continuously processed rolled steel strip the method comprising using a computer aided dynamic property predictive control model hereinafter referred to as DPPC comprising a material property model hereinafter referred to as MPM, which predicts a set of preliminary process settings hereinafter referred to as PPS with which the target mechanical, surface and geometry properties for a segment of strip can be obtained according to the MPM, and a dynamic process model, hereinafter referred to as DPM, which determines whether these PPS can be realised in the CPL, wherein the output of the MPM is used as input parameters for the DPM to enable the DPM to provide final process settings, hereinafter referred to as FPS for the CPL, wherein the input parameters for the MPM comprise:
• the production schedule, which is the succession of strips that are to be produced, wherein each strip has its own set of properties such as strip dimensions, the chemical composition, the entry conditions and in-strip spatial inhomogeneities as created by the prior processes, the target mechanical, surface and geometry properties
• target values for a segment of the incoming rolled strip for the mechanical, surface and/or geometry properties
• one or more parameters of prior process conditions and/or predicted or measured mechanical, surface and/or geometry properties of said segment
• optionally one or more elements of the chemical composition of said segment of the steel strip
• optionally one or more microstructural parameters of said segment of the incoming rolled strip
• optionally installation condition parameters
• optionally feedback parameters from on-line property measurements of the incoming rolled strip
• optionally feedback parameters from off-line property measurements and wherein the input parameters for the DPM comprise
• the output of the MPM
and one or more of:
• installation condition parameters
• one or more of the input parameters for the MPM
• optionally feedback from on-line CPL process measurements to produce the FPS for the segment of the steel strip and wherein the FPS for the segment are fed into the computerised process automation of the CPL, whereby the segment of the steel strip is subsequently produced satisfying the target mechanical, surface and/or geometry properties.

2. Method according to claim 1 wherein the FPS for the segment are optimised in an iterative process wherein the output of the DPM is fed back into the MPM for the next iteration until the difference between the target mechanical, surface and/or geometry properties of the segment and the achievable mechanical, surface and/or geometry properties of the segment has reached a pre-set minimum.

3. Method according to claim 1 or 2 wherein the incoming rolled strip is a hot-rolled strip.

4. Method according to claim 1, 2 or 3 wherein the incoming rolled strip is a cold-rolled strip.

5. Method according to any one of claims 1 to 4 wherein the continuous processing line comprises one or more of:
• a continuous annealing step
• a first coating process step
• a temper-rolling and/or tension levelling process step
• a second coating process step
• a post-processing step

6. Method according to claim 5 wherein the first and/or second coating step is a hot-dip coating process or an electroplating process.

7. Method according to claim 5 to 6 wherein the DPPC also provides the FPS for the CPL automation of the thickness control of the coating layer.

8. Method according to any one of claims 5 to 7 wherein the first and/or second coating step is an organic coating step.

9. Method according to any one of claims 5 to 8 wherein the first and/or second coating step is an inorganic coating step, such as physical vapour deposition.

10. Method according to any one of claims 1 to 9 wherein a re-calculation of the process settings is performed when the production schedule or the input parameters for the DPPC are changed.

11. Method according to any one of claims 1 to 10 wherein the re-calculation of the process settings is performed at least once per 30 minutes.

12. Computerised process automation system for a continuous processing line configured for carrying out a method according to one of claims 1 to 11 during operation.

13. Continuous processing line which comprises the computerised process automationsystem according to claim 12.

14. Continuous processing line comprising the computerised process automation system of claim 12 in which, during operation, the FPS for a segment of incoming steel strip are determined, set and realised by the computerised process automation system according to claim 12 to enable production of a segment of the steel strip satisfying the target mechanical, surface and/or geometry properties.

## Patentansprüche

1. Verfahren zum Betrieb einer kontinuierlichen Verarbeitungsstraße, im Folgenden als CPL bezeichnet,
wobei die CPL einen Glühschritt zur Herstellung von kontinuierlich verarbeitetem gewalztem Stahlband umfasst, wobei das Verfahren die Verwendung eines computergestützten dynamischen Modells zur prädiktiven Steuerung von Eigenschaften, nachstehend als DPPC bezeichnet, umfasst, umfassend ein Materialeigenschaftenmodell, im Folgenden als MPM bezeichnet, das einen Satz von vorläufigen Prozesseinstellungen, im Folgenden als PPS bezeichnet, vorhersagt, mit denen die angestrebten mechanischen, Oberflächen- und Geometrieeigenschaften für ein Bandsegment gemäß dem MPM ermittelt werden können, und ein dynamisches Prozessmodell, im Folgenden als DPM bezeichnet, das bestimmt, ob diese PPS in der CPL realisiert werden können, wobei die Ausgabe des MPM als die Eingabeparameter für das DPM verwendet wird, um dem DPM zu ermöglichen, endgültige Prozesseinstellungen, im Folgenden als FPS bezeichnet, für die CPL bereitzustellen, wobei die Eingabeparameter für das MPM umfassen:
• den Produktionsplan, bei dem es sich um die Aufeinanderfolge von Bändern handelt, die herzustellen sind, wobei jedes Band seinen eigenen Satz von Eigenschaften wie Bandabmessungen, die chemische Zusammensetzung, die Eintrittsbedingungen und bandinterne räumliche Inhomogenitäten, wie sie durch die vorherigen Prozesse entstanden sind, die angestrebten mechanischen, Oberflächen- und Geometrieeigenschaften aufweist
• Zielwerte für ein Segment des eintretenden Walzbands für die mechanischen, Oberflächen- und/oder Geometrieeigenschaften
• einen oder mehrere Parameter vorheriger Prozessbedingungen und/oder vorhergesagter oder gemessener mechanischer, Oberflächen- und/oder Geometrieeigenschaften des Segments
• optional ein oder mehrere Elemente der chemischen Zusammensetzung des Segments des Stahlbands
• optional einen oder mehrere Mikrostrukturparameter des Segments des eintretenden Walzbands
• optional Installationsbedingungsparameter
• optional Feedback-Parameter aus Online-Eigenschaftsmessungen des eintretenden Walzbands
• optional Feedback-Parameter aus Offline-Eigenschaftsmessungen und wobei die Eingabeparameter für das DPM umfassen
• die Ausgabe des MPM
und eines oder mehrere von:
• Installationsbedingungsparametern
• einem oder mehreren der Eingabeparameter für das MPM
• optional Feedback aus Online-CPL-Prozessmessungen
zur Erzeugung der FPS für das Segment des Stahlbands und wobei die FPS für das Segment in die computergesteuerte Prozessautomatisierung der CPL eingespeist werden, wodurch das Segment des Stahlbands anschließend unter Erfüllung der angestrebten mechanischen, Oberflächen- und/oder Geometrieeigenschaften hergestellt wird.

2. Verfahren nach Anspruch 1, wobei die FPS für das Segment in einem iterativen Prozess optimiert werden, wobei die Ausgabe des DPM wieder in das MPM für die nächste Iteration eingespeist wird, bis die Differenz zwischen den angestrebten mechanischen, Oberflächen- und/oder Geometrieeigenschaften des Segments und den erzielbaren mechanischen, Oberflächen- und/oder Geometrieeigenschaften des Segments ein voreingestelltes Minimum erreicht hat.

3. Verfahren nach Anspruch 1 oder 2, wobei das eintretende Walzband ein warmgewalztes Band ist.

4. Verfahren nach Anspruch 1, 2 oder 3, wobei das eintretende Walzband ein kaltgewalztes Band ist.

5. Verfahren nach einem der Ansprüche 1 bis 4, wobei die kontinuierliche Verarbeitungsstraße eines oder mehrere von Folgendem umfasst:
• einem kontinuierlichen Glühschritt
• einem ersten Beschichtungsprozessschritt
• einem Dressier- und/oder Streckrichtprozessschritt
• einem zweiten Beschichtungsprozessschritt
• einem Nachbearbeitungsschritt.

6. Verfahren nach Anspruch 5, wobei der erste und/oder zweite Beschichtungsschritt ein Schmelztauchbeschichtungsprozess oder ein Elektroplattierungsprozess ist.

7. Verfahren nach Anspruch 5 bis 6, wobei das DPPC auch die FPS für die CPL-Automatisierung der Dickensteuerung der Beschichtungsschicht bereitstellt.

8. Verfahren nach einem der Ansprüche 5 bis 7, wobei der erste und/oder zweite Beschichtungsschritt ein organischer Beschichtungsschritt ist.

9. Verfahren nach einem der Ansprüche 5 bis 8, wobei der erste und/oder zweite Beschichtungsschritt ein anorganischer Beschichtungsschritt wie z. B. physikalische Dampfabscheidung ist.

10. Verfahren nach einem der Ansprüche 1 bis 9, wobei eine Neuberechnung der Prozesseinstellungen durchgeführt wird, wenn der Produktionsplan oder die Eingabeparameter für das DPPC geändert werden.

11. Verfahren nach einem der Ansprüche 1 bis 10, wobei die Neuberechnung der Prozesseinstellungen mindestens einmal alle 30 Minuten durchgeführt wird.

12. Computergesteuertes Prozessautomatisierungssystem für eine kontinuierliche Verarbeitungsstraße, das konfiguriert ist zum Ausführen eines Verfahrens nach einem der Ansprüche 1 bis 11 während des Betriebs.

13. Kontinuierliche Verarbeitungsstraße, die das computergesteuerte Prozessautomatisierungssystem nach Anspruch 12 umfasst.

14. Kontinuierliche Verarbeitungsstraße, umfassend das computergesteuerte Prozessautomatisierungssystem nach Anspruch 12, bei dem, während des Betriebs, die FPS für ein eintretendes Stahlbandsegment von dem computergesteuerten Prozessautomatisierungssystem nach Anspruch 12 ermittelt, festgelegt und realisiert werden, um die Herstellung eines Segments des Stahlbands unter Erfüllung der angestrebten mechanischen, Oberflächen- und/oder Geometrieeigenschaften zu ermöglichen.

## Revendications

1. Procédé de fonctionnement d'une ligne de traitement en continu ci-après désignée sous le nom de CPL, la CPL comprenant une étape de recuit pour la production d'une bande d'acier laminée traitée en continu, le procédé comprenant l'utilisation d'un modèle de contrôle prédictif de propriétés dynamiques assisté par ordinateur ci-après désigné sous le nom de DPPC comprenant un modèle de propriétés de matériau ci-après désigné sous le nom de MPM, qui prédit un ensemble de paramètres de processus préliminaires ci-après désignés sous le nom de PPS avec lequel les propriétés mécaniques, de surface et géométriques cibles pour une section de bande peuvent être obtenues conformément au MPM, et un modèle de processus dynamique, ci-après désigné sous le nom de DPM, qui détermine si ces PPS peuvent être réalisés dans la CPL, les résultats du MPM étant utilisés comme paramètres d'entrée pour le DPM pour permettre au DPM de fournir les paramètres de processus finaux, ci-après désignés sous le nom de FPS pour la CPL, lesdits paramètres d'entrée pour le MPM comprenant :
• le programme de production, qui est la succession de bandes qui doivent être produites, chaque bande présentant son propre ensemble de propriétés telles que les dimensions de la bande, la composition chimique, les conditions d'entrée et les inhomogénéités spatiales dans la bande créées par les processus antérieurs, les propriétés mécaniques, de surface et géométriques cibles
• les valeurs cibles pour une section de la bande laminée entrante pour les propriétés mécaniques, de surface et/ou géométriques
• un ou plusieurs paramètres parmi les conditions de processus préalables et/ou les propriétés mécaniques, de surface et/ou géométriques prévues ou mesurées de ladite section
• éventuellement un ou plusieurs éléments de la composition chimique de ladite section de la bande d'acier
• éventuellement un ou plusieurs paramètres microstructuraux de ladite section de la bande laminée entrante
• éventuellement des paramètres de condition d'installation
• éventuellement des paramètres de rétroaction à partir de mesures de propriétés en ligne de la bande laminée entrante
• éventuellement des paramètres de rétroaction à partir de mesures de propriétés hors ligne et lesdits paramètres d'entrée pour le DPM comprenant
• les résultats du MPM
et un ou plusieurs éléments parmi :
• les paramètres de condition d'installation
• un ou plusieurs des paramètres d'entrée pour le MPM
• éventuellement la rétroaction des mesures de processus CPL en ligne afin de produire les FPS pour la section de la bande d'acier et lesdits FPS pour la section étant introduits dans l'automatisation de processus informatisée de la CPL, moyennant quoi la section de la bande d'acier est ensuite produite en satisfaisant les propriétés mécaniques, de surface et/ou géométriques cibles.

2. Procédé selon la revendication 1, lesdits FPS pour la section étant optimisés dans un processus itératif dans lequel les résultats du DPM sont retournés dans le MPM pour l'itération suivante jusqu'à ce que la différence entre les propriétés mécaniques, de surface et/ou géométriques cibles de la section et les propriétés mécaniques, de surface et/ou géométriques réalisables de la section ont atteint un minimum prédéfini.

3. Procédé selon la revendication 1 ou 2, ladite bande laminée entrante étant une bande laminée à chaud.

4. Procédé selon la revendication 1, 2 ou 3, ladite bande laminée entrante étant une bande laminée à froid.

5. Procédé selon l'une quelconque des revendications 1 à 4, ladite ligne de traitement en continu comprenant une ou plusieurs étapes parmi :
• une étape de recuit en continu
• une première étape de processus d'enduction
• une étape de processus d'écrouissage à froid et/ou de planage par étirage
• une seconde étape de processus d'enduction
• une étape de post-traitement.

6. Procédé selon la revendication 5, ladite première et/ou ladite seconde étape d'enduction étant un processus d'enduction par immersion à chaud ou un processus de dépôt électrolytique.

7. Procédé selon la revendication 5 à 6, ledit DPPC fournissant également les FPS pour l'automatisation CPL du contrôle de l'épaisseur de la couche de revêtement.

8. Procédé selon l'une quelconque des revendications 5 à 7, ladite première et/ou ladite seconde étape d'enduction étant une étape d'enduction organique.

9. Procédé selon l'une quelconque des revendications 5 à 8, ladite première et/ou ladite seconde étape d'enduction étant une étape d'enduction inorganique, telle qu'un dépôt physique en phase vapeur.

10. Procédé selon l'une quelconque des revendications 1 à 9, un recalcul des paramètres de processus étant effectué lorsque le programme de production ou les paramètres d'entrée pour le DPPC sont modifiés.

11. Procédé selon l'une quelconque des revendications 1 à 10, ledit recalcul des paramètres de processus étant effectué au moins une fois toutes les 30 minutes.

12. Système d'automatisation de processus informatisée, pour une ligne de traitement en continu conçue pour transporter un procédé selon l'une des revendications 1 à 11 lors du fonctionnement.

13. Ligne de traitement en continu qui comprend le système d'automatisation de processus informatisée selon la revendication 12.

14. Ligne de traitement en continu comprenant le système d'automatisation de processus informatisée selon la revendication 12, lors du fonctionnement, lesdits FPS pour une section de bande d'acier entrante étant déterminés, réglés et réalisés par le système d'automatisation de processus informatisée selon la revendication 12 pour permettre la production d'une section de la bande d'acier satisfaisant les propriétés mécaniques, de surface et/ou géométriques cibles.
